# EUROPÄISCHE PATENTSCHRIFT

(11) **EP 2 140 321 B1**
(45) Veröffentlichungstag und Bekanntmachung des Hinweises auf die Patenterteilung: **20.07.2011**
(21) Anmeldenummer: 08748698.1
(22) Anmeldetag: 28.03.2008
(51) Int. Cl.: G05B 19/418, B23Q 3/155

(54) **STEUERUNG VON WERKZEUGMASCHINEN MIT EINEM WERKZEUGMAGAZIN UND EINEM ZWISCHENSPEICHER**
CONTROL OF MACHINE TOOLS COMPRISING A TOOL MAGAZINE AND AN INTERMEDIATE STORAGE STATION
COMMANDE DE MACHINES-OUTILS COMPORTANT UN MAGASIN D'OUTILS ET UN COMPARTIMENT DE STOCKAGE INTERMÉDIAIRE

(30) Priorität: 04.04.2007 DE 102007016234
(43) Veröffentlichungstag der Anmeldung: 06.01.2010
(73) Patentinhaber: Toyoda Mitsuiseiki Europe Gmbh, 47809 Krefeld-Oppum (DE)
(72) Erfinder: ECKHARDT, Marco, 42553 Velbert (DE); SPEICH, Robert, 33100 Paderborn (DE)
(74) Vertreter: Mann, Volker
(86) Internationale Anmeldenummer: PCT/DE2008/000521
(87) Internationale Veröffentlichungsnummer: WO 2008/122263

(56) Entgegenhaltungen:
- EP-A- 0 553 621
- EP-A- 1 153 705
- WO-A-2006/050551

## Beschreibung

Die Erfindung betrifft ein Verfahren zur Steuerung von Werkzeugmaschinen durch Abstimmung der CNC-Steuerungen und der PLC-Steuerung im Werkzeugmagazin und der Werkzeugmaschine durch eine separate Steuerung.

Die Bearbeitung komplexer Werkstücke erfordert viele unterschiedliche Bearbeitungswerkzeuge, da jedes Werkzeug spezielle Teilaufgaben zur Fertigstellung des Werkstückes übernimmt. Bearbeitungszentren haben zu diesem Zweck ein integriertes Werkzeugmagazin.

Elektronisch gesteuert wird für den jeweiligen Bearbeitungsschritt ein spezifisches Werkzeug gewählt und die Spindel der Bearbeitungsmaschine eingewechselt. Der nächste Bearbeitungsschritt kann jetzt mit diesem Werkzeug durchgeführt werden. Dieser Vorgang wiederholt sich, bis das Werkstück fertig gestellt ist.

Bei jedem Werkzeugwechsel wird die Bearbeitung unterbrochen bis der Wechsel komplett abgeschlossen ist. Die Wechselzeit variiert sehr stark je nach Magazinart (Kette, Matrix), den verwendeten Zugriffsverfahren (geordnetes oder chaotisches Verfahren) und der Anzahl der Werkzeugplätze. Ein realistischer Wert für einen Werkzeugwechsel einschließlich Bereitstellungszeit liegt zwischen 30 und 120 Sekunden für jeden Werkzeugwechsel.

Diese Wartezeiten auf das nächste Werkzeug wird in der Regel dadurch verkürzt, dass innerhalb einer computerisierten numerischen Steuerung (CNC-Steuerung) Befehle kodiert werden, welche eine Magazintransporteinheit anweisen, schon das Folgewerkzeug bereitzustellen. So wird beim nächsten Wechselbefehl nur noch das Werkzeug zwischen der Spindel und der Transporteinheit getauscht. Das geht deutlich schneller, da die Transportzeiten entfallen.

Der Vorteil dieser Optimierung versagt Jedoch gänzlich bei kurzen Werkzeugwegen und bei kurzen Werkzeugbearbeitungs-Sequenzen, wenn also die Bearbeitungszeiten des Werkzeugs kleiner sind als die Bereitstellungszeiten des verwendeten Magazins.

Um diese Wartezeiten zu minimieren ist es von Vorteil, während langen Werkzeugbearbeitungszeiten beliebig viele Folgewerkzeuge möglichst spindelnah zwischenzulagern (Zwischenspeicher) und / oder bereitzustellen.

Diese Art vom Be- und Entladen von Werkzeugmaschinen mit Werkzeugen wird beispielsweise in der WO 2006/050551 A2 beschrieben. Nach diesem Verfahren werden zunächst die Werkzeuge aus einem Magazin in einen Zwischenspeicher übernommen, wobei die Werkzeuge bei der Übergabe an die Werkzeugmaschine über eine Wechselvorrichtung gleichzeitig aus dem Zwischenspeicher und der Werkzeugmaschine entnommen bzw. In diese eingesetzt werden. Nachteilig an diesem Verfahren sind die durch unkoordinierte Abläufe auftretende Verzögerungen und damit eine Verteuerung der Bearbeitung des Werstücks.

Die EP 0 645 721 A1 betrifft die Steuerung und Organisation von verschiedenen Multimedia-Darsteilungen, bei denen Überschneidungen der Darstellungen vermieden werden.

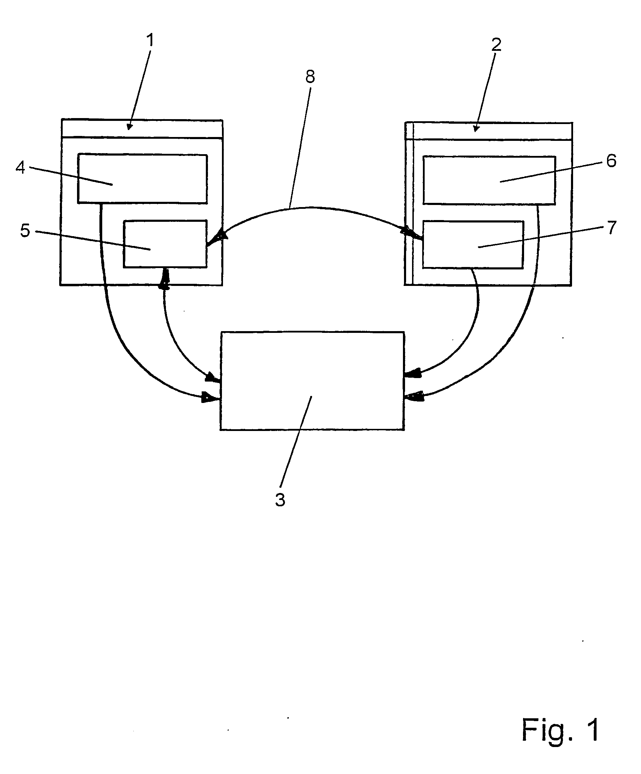

Die einzelnen Darstellungen sind in einzelne Speicher abgelegt und werden in einem Wiedergabe-Gerät zusammengeführt, Die Steuerung vom Speicherwiedergabe-Gerät wird durch einen zentralen Rechner gesteuert (Figur 1).

In der DE 601 04 476 T2 wird eine Werkzeug-Wechseleinrichtung beschrieben,' bei der ein Wechselarm durch Eingriff einer Nocke und eines Nockenstößels drehbar ist, Wie in Figur 5 dargestellt ist, weist die numerische Steuerung eine computerisierte numerische Steuerung (CNC), eine programmierbare logische Steuerung (PLC) und ein Eingabe-Ausgabe-Interrface auf.

In der EP 0 553 621 A1 wird eine programmierbare Computersteuerung für Werkzeugmaschinen beschrieben. In einem ersten Anpasssteuermodul zwischen der CNC-Steuerung und dem zu bearbeitenden Werkstück und einer Anpasssteuerung zur Steuerung der Maschinenfunktlon werden über eine Schnittstelle zwischen dem CNC-Tell und dem ersten Anpasssteuermodul Steuerbefehle von dem CNC-Tell zum ersten Anpasssteuermodul übertragen, wobei die Steuerbefehle vom CNC-Teil mittels Dateneingabeeinrichtung beeinflussbar sind.

In der DE 698 28 947 T2 wird ein flexibles Herstellungssystem unter Vollendung einer Werkzeugmaschine beschrieben. Ober eine Steuerungseinheit 50 erfolgt eine Indexierung von einzelnen Werkstück-Übertragungseinheiten zur Bearbeitung an den Spindelköpfen der Werkzeugmaschine.

Aufgabe der vorliegenden Erfindung ist die Steuerung von Werkzeugmaschinen mit Werkzeugen zur Bearbeitung von Werkstücken, bei der die Abläufe so koordiniert sind, dass praktisch nur geringfügige Wartezeiten auftreten.

Es wurde ein Verfahren zur Steuerung des Be- und Entladens von Werkzeugmaschinen mit den Merkmalen des Anspruchs 1 gefunden.

Das Magazin und die Werkzeugmaschine im Rahmen der vorliegenden Erfindung können jeweils mit einer eigenen bzw. einer gemeinsamen CNC-Steuerung und PLC-Steuerung ausgestattet sein. Bevorzugt können Mehrkanalsteuerungen, bevorzugt Doppelkanalsteuerungen, verwendet werden.

Die Verknüpfung der einzelnen Komponenten gemäß der vorliegenden Erfindung sei durch die schematische Darstellung In Figur 1 erläutert;

Das Magazin 1 und die Werkzeugmaschine mit Spindel 2 sind Jeweils mit einer CNC-Steuerung und einer PLC-Steuerung 4 und 5 und 6 und 7 ausgestattet. Dabei kann es sich auch um eine Steuerung mit verschiedenen Kanälen handeln. Die Abstimmung der elektronischen Komponenten erfolgt über die separate Steuerung 3. Bei dieser Steuerung handelt es sich um eine Software-Applikation. Diese kann ebenfalls auch auf der CNC-Steuerung integriert sein (abhängig vom Betriebssystem). So erhält die elektronische Steuerung 3 Signale (Information) Ober den aktuellen Status des Magazins 1, das durch seine CNC-Steuerung 4 geordnet wird. In gleicher Weise erhält die Steuerung 3 Signale (Information) über den aktuellen Status der Spindel in der Werkzeugmaschine, deren Bedarf durch die PLC-Steuerung 7 festgelegt ist. Anhand dieser Information steuert die elektronische Steuerung 3 über die PLC-Steuerungen 5 und 7 die Entnahme und die Zurückgabe eines Werkzeug an das Magazin bzw. das Be- und Entladen der Spindel über an sich bekannte Transporteinheiten, den Zwischenspeicher und die Wechselvorrichtung.

Mit Hilfe des erfindungsgemäßen Verfahrens wird der Zeitverlust bei dem Auswechseln eines Werkzeugs in die Spindel praktisch auf die Zeit der Entnahme und des Einsetzens reduziert, da ein Zeitverlust durch den Transport des Werkzeugs aus dem Magazin zur Spindel entfällt. Durch den Zeitgewinn ist eine kostengünstige Herstellung der gewünschten Werkstücke möglich.

Die an sich bekannte speicherprogrammierbare Steuerung (PLC) ist eine elektronische Baugruppe, die in der Automatisierungstechnik für Steuerungs und Regelungsaufgaben eingesetzt wird.

Die PLC-Technik hat eine Prozessor-Architektur, die im Wesentlichen für die Bit-, Byte- oder Wort-Verknüpfung optimiert ist. Die unterschiedliche Adressierung ist dann besonders zu beachten, wenn unterschiedliche Steuerungen über Feldbus, zum Beispiel Profibus, miteinander verknüpft werden. Unter Umständen müssen dann Bytes innerhalb des Programms paarweise getauscht werden, um die richtige Information abzubilden. Die Anpassung der Bit-, Byte-, Wort-Verarbeitung an die zu steuernde Maschine oder Anlage erfolgt durch ein Programm, das den gewünschten Ablauf festlegt und im Speicher abgelegt wird.

Üblicherweise wird der PLC-Steuerung auch Software zur Kommunikation des Programmiergeräts mit der Steuerung mitgeliefert. Die Programmierung geschieht über dieses Programmiergerät, zum Beispiel eine Anwendung unter Windows / Linux auf einem PC oder einem zugeschnittenem System. Die hier bereitgestellte, sogenannte Konfiguration wird beim Programmieren auf die Steuerung geladen. Sie bleibt dort solange im Speicher, bis sie vom Benutzer gelöscht oder überschrieben wird.

Unter der CNC-Technik (Computerized Numerical Control) im Rahmen der vorliegenden Erfindung versteht man die elektronische Steuerung von Werkzeugmaschinen.

Die an sich bekannte computerisierte numerische Steuerung (CNC) ist ein elektronisches Gerät zur Steuerung von Werkzeugmaschinen.

Aus dem CNC-Programm werden in der Werkzeugmaschine die Stützpunkte in kurzen Zeitabschnitt interpoliert. Diese dienen als Führungsgröße der einzelnen Achsen unter Beachtung von maximalen Geschwindigkeiten. Es wird also beachtet, dass die Maschine nur in bestimmten Grenzen den Beschleunigungsvorgaben folgen kann und auch die zeitlichen Änderungen der Beschleunigungen zu begrenzen sind.

Die Steuerung einer CNC-Werkzeugmaschine erfolgt über einen direkt in die Steuerung integrierten Computer, der mit Positions-, Dreh(winkel)- und Zustands-Sensoren den "Ist-Zustand" erfasst und nach Berechnung der Interpolation zum "Soll-Zustand" aus dem CNC- Programm die Steuerung der Motoren und anderer gesteuerter Maschinenelemente entsprechend regelt. Die Interpolation erfolgt dabei im Bereich von Millisekunden, so dass eine hohe Präzision auch bei hoher Geschwindigkeit selbst bei komplizierten Formen gewährleistet ist.

Gemäß der vorliegenden Erfindung wird eine separate Steuerung zur Abstimmung der CNC-Steuerung und der PLC-Steuerung im Magazin und in der Werkzeugmaschine eingesetzt.

Die Steuerung ist gekennzeichnet durch das Auslesen aller verwendeten Werkzeuge aus dem momentanen Bearbeitungsprogramm der Werkzeugmaschine. Diese Werkzeuge in eine gewünschte Reihenfolge, je nach momentanem Bearbeitungsstand, zu bringen und dem Zwischenspeicher / Bereitstellungsbereich zur Verfügung zu stellen, sowie die Entscheidung, welche Werkzeuge aus dem Zwischenspeicher / Bereitstellungsbereich wieder in den Magazinbereich zurückgeführt werden, kann bevorzugt wie folgt ablaufen:
Beim Starten des Bearbeitungsprogrammms in der Werkzeugmaschine wird zuerst die CNC-Programmstruktur initialisiert. Vorhandene CNC-Daten werden in der Struktur gelöscht.

Anschließend werden das CNC-Hauptprogramm und alle enthaltenen Unterprogramme ermittelt und aus der CNC-Steuerung ausgelesen. Diese CNC-Daten werden zur späteren Verwendung intern in einer Struktur abgelegt.

Für die weitere Beurteilung der Situation wird der Programmpointer beim laufenden CNC-Programm der Werkzeugmaschine ermittelt. Hierzu muss ein CNC-Programm ermittelt und das aktuelle CNC-Programm erkannt werden. Es stehen verschiedene Verfahren zur Verfügung:
● Die CNC-Steuerung besitzt eine direkte Funktion zur Ermittlung der Position im laufenden CNC-Programm.
● Die CNC-Steuerung hat keine Funktion, die verwendet werden kann; in diesem Fall muss diese Funktionalität mit vorhandenen Mitteln nachgebildet werden.

Ist der Programmpointer ermittelt, kann die CNC-Struktur nach Folgewerkzeugen durchsucht werden. Dabei wird ab der aktuellen Position in allen für die Bearbeitung verwendeten Unterprogrammen gesucht. Alle gefundenen Werkzeuge werden in einer "Folgeliste" protokolliert.

In einem dynamisch laufenden Prozess sind nicht immer alle Werkzeuge an ihrem Platz im Speicher des Magazins, da sie sich ebenso in der Transporteinbeit oder in der Spindel befinden können.

Diese Werkzeuge und ihre Positionen im System müssen ermittelt werden. Die Ergebnisse werden in einer "Status-Liste" protokolliert.

Bei einem leeren Wechselspeicher spielt es keine Rolle, an welcher Position ein Folgewerkzeug im Wechselspeicher abgelegt wird. Sind bereits Werkzeuge im Wechselspeicher vorhanden, muss entschieden werden, welche Werkzeuge im Wechselspeicher verbleiben und welche Werkzeuge im Wechselspeicher ersetzt werden müssen.

Die Grundlage für diese Beurteilung bildet die "Status-Liste" und die "Folge-Liste". Der Inhalt beider Listen wurde bereits in dem vorherigen Schritt mit aktuellen Daten fortgeschrieben.

Durch die separate elektronische Steuerung im Rahmen der vorliegenden Erfindung werden die Prioritäten für das Einwechseln der Werkzeuge in die Spindel festgelegt. Für die Bewertung mit Prioritäten sind die Positionen des Wechselspeichers wichtig.

Danach werden die Prioritäten der Status-Liste bewertet und überschrieben. Alle Werkzeug-Plätze im Wechselspeicher können bestückt oder getauscht werden, da sie für die unmittelbare Bearbeitung ohne Bedeutung sind. Alle anderen Werkzeuge werden demnächst in der Spindel eingesetzt. Weiterhin kann die maximale Anzahl der Nachladewechselvorgänge ermittelt werden, indem die Anzahl der Positionen im Magazin gezählt werden. Das Verfahren ist einfach und für Wechselspeicher mit beliebig vielen Plätzen anwendbar. Ein Algorithmus ist nach diesem Verfahren in jeder Computersprache einfach zu realisieren.

Ist die Anzahl der möglichen Nachladewerkzeuge bekannt, wird die Nachladeliste generiert. Dabei wird beginnend mit dem ersten Element der Folge-Liste überprüft, ob das Element in der Status-Liste bereits vorhanden ist. Wenn noch nicht vorhanden, wird das Element in die Nachladeliste kopiert. Anderenfalls wird die Untersuchung mit dem nächsten Element der Folgeliste wiederholt, bis das Ende der Folge-Liste erreicht ist oder die Nachladeliste eine maximale Anzahl von Elementen beinhaltet.

Sofern die Transporteinheit für weitere Transporte bereit ist, wird die Nachladeliste abgearbeitet. Dabei wird das erste Element der Nachladeliste entnommen und eine Transportanweisung generiert. Nach erfolgreicher Transport-Rückmeldung wird das Element aus der Liste gelöscht. Dadurch rücken alle anderen Elemente nach. Dieser Vorgang wird wiederholt, bis die Nachladeliste leer ist oder weitere PLC-Ereignisse erkannt werden.

PLC-Ereignisse können beispielsweise eine Beendigung des Werkzeugwechsels, ein CNC-Stop oder eine Fehlermeldung sein.

Wird das Programm beendet (Ereignis: Programm-Stop), müssen interne Aufräumungsarbeiten in der Werkzeugmaschine durchgeführt werden. Dabei wird unter anderem der Inhalt aller Listen gelöscht, die zu diesem Zeitpunkt nicht mehr relevant sind.

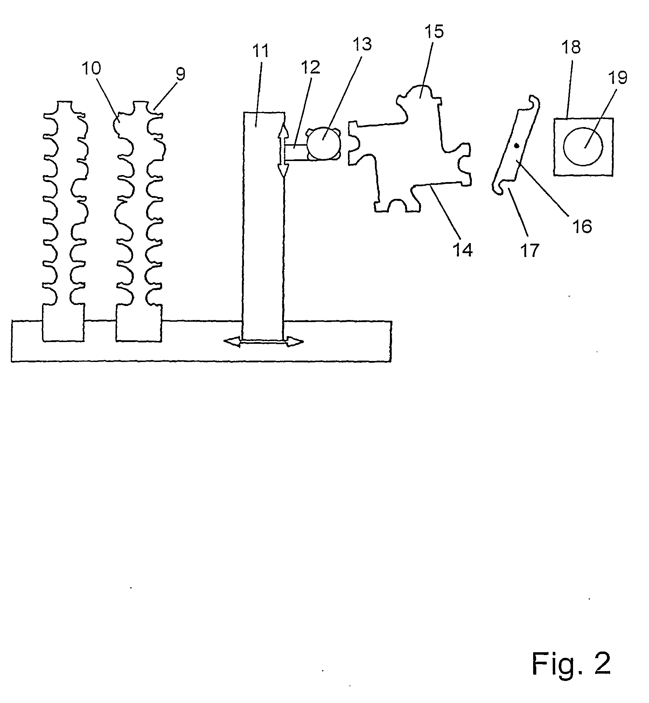

Am Beispiel eines vierarmigen Zwischenspeichers soil die Anordnung des Be- und Entladens einer Werkzeugmaschine erläutert werden (Figur 2).

In dem mit CNC-Steuerung und PLC-Steuerung ausgestatteten Matrixmagazin 9 befinden sich an den einzelnen Speicherplätzen die einzelnen Werkzeuge 10. Die Werkzeuge werden mit Hilfe der beweglichen TransportEinheit 11 mit dem beweglichen Greifer 12 von dem Magazin 9 an den Zwischenspeicher 14 gebracht. Die Bewegungsmöglichkeiten der TransportEinheit 11 sind durch Pfeile gekennzeichnet.

In dem vierarmigen Zwischenspeicher 14 werden die Werkzeuge 15 abgelegt.

Aus dem Zwischenspeicher 14 werden über die Wechselvorrichtung 16 die Werkzeuge 17 entnommen und in die Spindel 18 an dem Platz 19 eingesetzt.

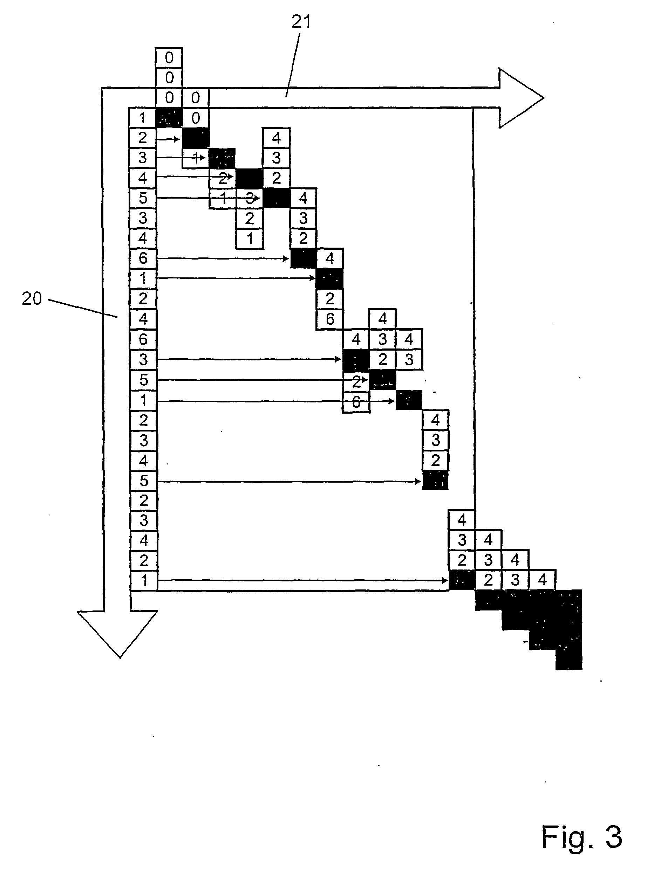

Im Rahmen der vorliegenden Erfindung soll durch die Figur 3 die gewünschte Werkzeugwechsel-Sequenz bei Verwendung eines Vierfach-Zwischenspeichers erläutert werden.

In Figur 3 sind auf der Abszisse 21 die einzelnen Zustände des Werkzeugwechsels und auf der Ordinate 20 die Wechselsequenz im CNC-Code dargestellt. Jedes Feld in der Grafik symbolisiert einen Platz im Zwischenspeicher,

Man erkannt in der Grafik die eingesparten Transportfahrten der TransportEinheit aus dem Magazin zum Wechselspeicher bei voller Bereitstellung des nachfolgenden Werkzeugs. Das CNC-Programm fordert 24 Werkzeugwechsel, wovon aber nur 12 durch die Pufferung in dem Zwischenspeicher tatsächlich transportiert werden.

### BEZUGSZEICHENLISTE:

- 1.: Magazin
- 2.: Werkzeugmaschine mit Spindel
- 3.: elektronische Steuerung (PC)
- 4.: CNC Steuerung des Magazins (1)
- 5.: PLC Steuerung des Magazins (1)
- 6.: CNC Steuerung der Werkzeugmaschine (2)
- 7.: PLC Steuerung der Werkzeugmaschine (2)
- 8.: Austausch der Signale
- 9.: Matrixmagazin
- 10.: Werkzeug im Matrixmagazin (9)
- 11.: bewegliche Transporteinheit für die Werkzeuge
- 12.: Greifarm für die Werkzeuge
- 13.: Werkzeug im Greifarm
- 14.: vierarmiger Zwischenspeicher
- 15.: Werkzeug in dem Zwischenspeicher
- 16.: Wechselvorrichtung
- 17.: Greifer für das Werkzeug in der Wechselvorrichtung
- 18.: Spindel in der Werkzeugmaschine
- 19.: Werkzeug in der Spindel
- 20.: Zustände des Werkzeugwechsels
- 21.: Wechselsequenz im CNC-Code

## Patentansprüche

1. Verfahren zur Steuerung des Be- und Entladens von Werkzeugmaschinen (2) mit Werkzeugen (10, 13, 15, 19), bei dem die Werkzeuge (10, 13, 15, 19) aus einem Magazin (1) zunächst in einen Zwischenspeicher (14) oder Bereitstellungsbereich übernommen werden und von diesem aus der Werkzeugmaschine (2) zugeführt werden,
wobei die Werkzeuge (10, 13, 15, 19) bei der Übergabe an die Werkzeugmaschine (2) über eine Wechselvorrichtung (16) aus dem Zwischenspeicher (14) / Bereitstellungsbereich und der Werkzeugmaschine (2) entnommen bzw. in diese eingesetzt werden,
wobei eine CNC-Steuerung (4) und eine PLC-Steuerung (5) zur Steuerung des Magazins (1) und eine CNC-Steuerung (6) und eine PLC-Steuerung (7) zur Steuerung der Werkzeugmaschine (2) vorgesehen sind, und
wobei eine separate Steuerung (3) über die PLC-Steuerungen (5, 7) zur Steuerung einer Entnahme und Zurückgabe eines Werkzeugs (10, 13, 15, 19) an das Magazin (1) bzw. zum Be- und Entladen einer Spindel (18) der Werkzeugmaschine (2) vorgesehen ist,
wobei Prioritäten für das Einwechseln der Werkzeuge (10, 13, 15, 19) in die Spindel (18) durch die separate Steuerung (3) festgelegt werden.

2. Verfahren nach Anspruch 1, **dadurch gekennzeichnet, dass** nach einem Starten eines Bearbeitungsprogramms in der Werkzeugmaschine (2) das CNC-Hauptprogramm und alle enthaltenen Unterprogramme ermittelt und aus der CNC-Steuerung (6) ausgelesen werden.

3. Verfahren nach Anspruch 2, **dadurch gekennzeichnet, dass** das ausgelesene Hauptprogramm und alle enthaltenen Unterprogramme zur späteren Verwendung intern in einen Struktur abgelegt werden.

4. Verfahren nach Anspruch 3, **dadurch gekennzeichnet, dass** die CNC-Struktur ab der aktuellen Position in allen für die Bearbeitung verwendeten Unterprogrammen nach Folgewerkzeugen durchsucht wird und diese in einer Folgeliste protokolliert werden.

5. Verfahren nach einem der Ansprüche 1 bis 4, **dadurch gekennzeichnet, dass** der Programmpointer beim laufenden CNC-Programm der Werkzeugmaschine (2) ermittelt wird.

6. Verfahren nach einem der Ansprüche 1 bis 5, **dadurch gekennzeichnet, dass** sich in der beweglichen Transport-Einheit (11), die Werkzeuge (13) von dem Magazin zu dem Zwischenspeicher (14) bingen kann oder in der Spindel (18) befindliche Werkzeuge (10, 13, 15, 19) und ihre Position in einer Status-Liste protokolliert werden.

7. Verfahren nach Anspruch 4 und 6, **dadurch gekennzeichnet, dass** aus der Folgeliste und der Statusliste eine Nachladeliste generiert wird.

## Claims

1. A method for controlling the loading and unloading of machine tools (2) with tools (10, 13, 15, 19), in which said tools (10,13,15,19) from a magazine (1) are first of all taken over into an intermediate storage station (14) or provision area and from there are supplied to the machine tool (2),
transferring the tools (10,13,15,19) from or to the intermediate storage station/provision area (14) respectively from or to the machine tool (2) using a changing apparatus (16) while transferring to the machine tool (2),
the CNC controller (4) and the PLC controller (5) being provided to control the magazine (1) and the CNC controller (6) and the PLC controller (7) being provided to control the machine tool (2),
and
a separate controller (3) being provided by the PLC controller (5, 7) to control the removal and the return of a tool (10, 13, 15, 19) from or to the magazine (1) or rather being provided for the upload and unload of a spindle (18) of the machine tool (2),
wherein priorities are being appointed by the separate control (3) to exchange the tools (10, 13, 15, 19) into the spindle (18) of the tool machine (2).

2. The method as claimed in claim 1, **characterized in that** the CNC main programme and all sub-programmes are ascertained and read out of the CNC controller (6) once the process programme in the machine tool (2) has been launched.

3. The method as claimed in claim 2, **characterized in that** the readout main programme and all containing sub-programmes for a later internal use are filed in a CNC structure.

4. The method as claimed in claim 3, **characterized in that** the CNC structure from the actual position in used subprogrammes required for working is being browsed for follow-on tools and said follow-on tools being saved in a list of compounds.

5. The method as claimed in claims 1 to 4, **characterized in that** the programme pointer is being ascertained while the CNC programme of the machine tool (2) is running.

6. The method as claimed in claims 1 to 5, **characterized in that** tools (10, 13, 15, 19) being located in the mobile conveyor system (11), which supplies the tools (13) from the magazine to the intermediate storage station (14), or in the spindle (18) are registered with their positions in a status list.

7. The method as claimed in claims 4 to 6, **characterized in that** a reload list is being generated from the list of compounds and the status list.

## Revendications

1. Procédé de commande du chargement et du déchargement d'outils (10, 13, 15, 19) sur des machines-outils (2), dans lequel les outils (10, 13, 15, 19) sont tout d'abord transférés d'un magasin (1) dans un dispositif de stockage intermédiaire (14) ou une zone de préparation, puis amenés, depuis celui-ci ou celle-ci, à la machine-outil (2),
dans lequel les outils (10, 13, 15, 19) sont retirés du dispositif de stockage intermédiaire (14) ou de la zone de préparation et de la machine-outil (2), respectivement insérés dans ceux-ci, lors du transfert sur la machine-outil (2) par le biais d'un dispositif à navette (16),
dans lequel une commande numérique par ordinateur (CNC) (4) et une commande par automate programmable (PLC) (5) sont prévues pour commander le magasin (1) et une commande CNC (6) et une commande PLC (7) sont prévues pour commander la machine-outil (2), et
dans lequel une commande séparée (3) est prévue, par le biais des commandes PLC (5, 7), pour commander un retrait et un retour d'un outil (10, 13, 15, 19) sur le magasin (1) respectivement pour charger et décharger une broche (18) de la machine-outil (2),
dans lequel des priorités sont définies pour transférer les outils (10, 13, 15, 19) dans la broche (18) par le biais de la commande séparée (3).

2. Procédé selon la revendication 1, **caractérisé en ce que**, après avoir démarré un programme d'usinage dans la machine-outil (2), on définit le programme principal CNC et tous les sous-programmes qu'il contient et on les extrait de la commande CNC (6).

3. Procédé selon la revendication 2, **caractérisé en ce que** le programme principal extrait et tous les sous-programmes qu'il contient sont
mémorisés en interne dans une structure en vue d'une utilisation ultérieure.

4. Procédé selon la revendication 3, **caractérisé en ce que** la structure CNC est explorée, à partir de la position actuelle dans tous les sous-programmes utilisés pour l'usinage, afin de rechercher des outils progressifs et ceux-ci sont consignés dans une liste de séquences.

5. Procédé selon l'une des revendications 1 à 4, **caractérisé en ce que** le pointeur de programme est défini dans le programme CNC en cours de la machine-outil (2).

6. Procédé selon l'une des revendications 1 à 5, **caractérisé en ce que** des outils (10, 13, 15, 19), se trouvant dans la broche (18) ou dans l'unité de transport mobile (11) qui peut amener des outils (13) du magasin au dispositif de stockage intermédiaire (14), et leur position sont consignés dans une liste d'états.

7. Procédé selon les revendications 4 et 6, **caractérisé en ce qu'**une liste de rechargement est générée à partir de la liste de séquences et de la liste d'états.
